# FASCICULE DE BREVET EUROPEEN

(11) **EP 3 080 508 B1**
(45) Date de publication et mention de la délivrance du brevet: **28.04.2021**
(21) Numéro de dépôt: 14827475.6
(22) Date de dépôt: 05.12.2014
(51) Int. Cl.: F16L 53/00, H05B 3/14, H05B 3/58

(54) **DISPOSITIF DE CHAUFFAGE ELECTRIQUE**
ELEKTRISCHE HEIZVORRICHTUNG
ELECTRIC HEATING DEVICE

(30) Priorité: 12.12.2013 FR 1362509
(43) Date de publication de la demande: 19.10.2016
(73) Titulaire: TOTAL SE, 92400 Courbevoie (FR)
(72) Inventeur: LEWANDOWSKI, Alexandre, 64000 Pau (FR); REY-BETHBEDER, Franck, 64000 Pau (FR); DELAPORTE, Dominique, 64000 Pau (FR); LECHON, Alain, 64000 Pau (FR); GELI, Maurice, 64230 Lescar (FR); BUZARÉ, Yann, 64110 Gelos (FR)
(74) Mandataire: Plasseraud IP
(86) Numéro de dépôt international: PCT/FR2014/053186
(87) Numéro de publication internationale: WO 2015/086963

(56) Documents cités:
- WO-A1-02/104074
- WO-A1-2011/128544
- WO-A1-2011/128546
- DE-U1-202008 003 365
- FR-A1- 2 132 759
- US-A1- 2009 107 558

## Description

### DOMAINE TECHNIQUE

La présente invention est relative à un dispositif de chauffage électrique, par exemple une conduite chauffante pour le transport d'un fluide nécessitant au moins occasionnellement un réchauffage, ledit fluide comprenant par exemple un hydrocarbure.

### ETAT DE LA TECHNIQUE ANTERIEURE

Plus particulièrement, l'invention concerne un dispositif de chauffage électrique selon les caractéristiques de la revendication 1.

Le dispositif peut prendre diverses formes. Il peut être une plaque sensiblement plane, ou une plaque recourbée, ou une membrane flexible par exemple en élastomère, ou une conduite.

Une conduite chauffante est par exemple utilisée pour le transport d'un fluide comprenant un hydrocarbure, tel que décrit dans le document FR-2958991. En effet, ces conduites sont couramment utilisées dans des environnements très froids, à terre comme en mer, et parfois en mer à une très grande profondeur. Dans ces conditions, le fluide peut soit se congeler, soit se coaguler, soit présenter la formation de paraffine ou d'hydrates, ce qui peut générer des bouchons et entraver le transport du fluide dans la conduite. C'est pourquoi les conduites sont parfois réchauffées, par exemple par l'effet Joule d'un courant électrique passant dans une couche conductrice.

Une membrane flexible chauffante ou couverture chauffante est décrite dans le document FR-2958994. Cette couverture chauffante est par exemple enroulée autour d'une conduite non chauffante pour réchauffer le fluide.

Tous ces dispositifs comprennent une couche de chauffage en fibres de carbone qui s'étend sur toute la surface de leur support.

### EXPOSE DE L'INVENTION

La présente invention a pour but de perfectionner les dispositifs chauffants électriques précédents.

Le réchauffement peut être localisé principalement dans la surface de la couche de chauffage correspondant à la partie de circuit. Cela permet d'adapter le dispositif de chauffage, de chauffer uniquement des zones nécessaires, et de dépenser moins d'énergie électrique.

En outre, cela permet de mettre dans une unique couche de chauffage plusieurs lignes électriques, et donc de complexifier le circuit électrique. Notamment, il est possible d'utiliser une alimentation multiphasée, biphasée ou triphasée. Il est aussi possible de faire dans la même couche de chauffage le retour d'une première ligne dans une seconde ligne. La connexion électrique de la couche de chauffage peut ainsi être simplifiée et notamment localisée à un seul endroit du dispositif de chauffage électrique.

Enfin, on évite d'empiler plusieurs couches de chauffage, isolées les unes de autres par une couche intermédiaire d'isolation électrique. Il est ainsi possible d'obtenir un dispositif de chauffage avec une épaisseur réduite.

Dans divers modes de réalisation du dispositif selon l'invention, on peut éventuellement avoir recours en outre à l'une et/ou à l'autre des dispositions suivantes.

Selon un aspect de l'invention, le deuxième matériau comprend des deuxièmes fibres noyées dans une deuxième matrice en polymère, lesdites deuxièmes fibres étant non conductrices d'électricité.

Selon un aspect de l'invention, les deuxièmes fibres sont des fibres de verre.

Selon un aspect de l'invention, le polymère de la deuxième matrice est identique au polymère de la première matrice.

Selon un exemple, la partie de circuit comprend au moins deux lignes continues et séparées l'une de l'autre par des portions de séparation de la partie d'isolation.

Selon un aspect de l'invention, la partie de circuit comprend trois lignes continues et séparées l'une de l'autre par des portions de séparation de la partie d'isolation, chaque ligne étant alimentée par une phase d'une alimentation triphasée.

Selon un aspect de l'invention, chaque ligne comprend une section de ligne dans un plan sensiblement perpendiculaire à la surface, lesdites sections de ligne étant alternées avec les portions de séparation de partie d'isolation dans au moins une première direction dudit plan sensiblement parallèle à la surface.

Selon un aspect de l'invention, les sections de ligne sont alternativement décalées dans une deuxième direction sensiblement perpendiculaire à la première direction et dans une direction opposée à ladite deuxième direction.

Selon un aspect de l'invention, les sections de ligne ont sensiblement toutes la même surface.

Selon un aspect de l'invention, les sections de ligne ont une forme au moins deux fois plus allongée dans la première direction que dans une deuxième direction sensiblement perpendiculaire à la première direction.

Selon un aspect de l'invention, la couche de chauffage est réalisée par dépôt sur le support d'une pluralité de premières bandes composites composées du premier matériau et d'une pluralité de deuxièmes bandes composites composées du deuxième matériau, des positions de dépôt desdites premières et deuxièmes bandes composites déterminant la formation de la partie de circuit et de la partie d'isolation de la couche de chauffage.

Selon un aspect de l'invention :
- le support est un tube creux s'étendant dans une direction longitudinale et destiné à transporter un fluide comprenant un hydrocarbure, ledit tube ayant au moins une surface externe électriquement isolante, et
- la couche de chauffage est sensiblement une couche de forme cylindrique au dessus du tube.

Selon un aspect de l'invention, la ligne a une forme en hélice autour dudit tube, et la partie d'isolation a une portion de séparation qui s'étend entre chaque tour de l'hélice.

Selon un aspect de l'invention, le support est une membrane souple destinée à recouvrir au moins une zone d'un dispositif de transport d'un fluide comprenant un hydrocarbure, et la couche de chauffage est une couche qui recouvre au moins une face de ladite membrane.

### BREVE DESCRIPTION DES DESSINS

D'autres caractéristiques et avantages de l'invention apparaîtront au cours de la description suivante d'au moins un de ses modes de réalisation, donné à titre d'exemple non limitatif, en regard des dessins joints.

Sur les dessins :
- la figure la est une vue en coupe longitudinale d'un exemple de réalisation d'une conduite chauffante composite ;
- la figure 1b est une vue transversale de côté de la conduite de la figure la ;
- la figure 2 est une vue en perspective d'un exemple d'une conduite chauffante selon l'invention ;
- les figures 3a à 3e sont des vues transversales de couches de chauffages de dispositifs chauffants tels qu'une conduite ou couverture ;
- la figure 3f est une vue transversale de couches de chauffage de dispositifs chauffants tels qu'une conduite ou couverture selon l'invention;
- la figure 4 est une vue en perspective d'un mode de réalisation d'une couverture chauffante.

Sur les différentes figures, les mêmes références numériques désignent des éléments identiques ou similaires.

### DESCRIPTION DETAILLEE DE MODES DE REALISATION

Dans la présente description, les termes « avant » et « arrière » sont utilisés par rapport à la direction longitudinale X. Les termes « supérieur » ou « vers le haut » et « inférieur » ou « vers le bas » sont utilisés par rapport à la direction verticale Z, vers le haut, perpendiculaire à la direction longitudinale X et à la direction transversale Y.

Le dispositif de chauffage électrique de la présente invention peut être une couverture chauffante, une plaque chauffante, une conduite chauffante, ou tout autre dispositif de forme quelconque qui comprend une surface recouverte d'une couche dite « couche de chauffage ». Cette couche de chauffage comprend des fibres de carbone noyées dans une matrice en polymère, lesdites fibres de carbone permettant de faire passer un courant électrique qui réchauffe la couche par effet Joule.

Le terme « couverture » de la présente invention doit être compris comme étant un dispositif ayant une forme de membrane souple, pouvant être déformée pour entourer ou envelopper un dispositif de transport d'un fluide, tel qu'une conduite, une vanne, ou une tête de puits.

Le terme « conduite » de la présente invention doit être compris comme étant un dispositif comprenant un tube pour transporter un fluide au moins entre une entrée et une sortie, le dispositif pouvant comporter d'autres éléments, tels qu'une vanne, ou des dérivations multiples.

Le document FR-2958991 décrit une conduite comprenant une seule couche de chauffage comprenant des fibres de carbones pour conduire de l'électricité, et des couches d'isolation électrique (par exemple en fibre de verre). Il est possible de superposer plusieurs couches de chauffages en intercalant une couche d'isolation entre chaque couche de chauffage, afin de construire une conduite multicouche. Par exemple, on peut avoir une conduite avec deux couches de chauffage empilées, la deuxième couche de chauffage réalisant un retour électrique vers une unique extrémité d'alimentation. Par exemple, on peut avoir une conduite avec trois couches chauffage empilées, adaptée par exemple à une alimentation triphasée.

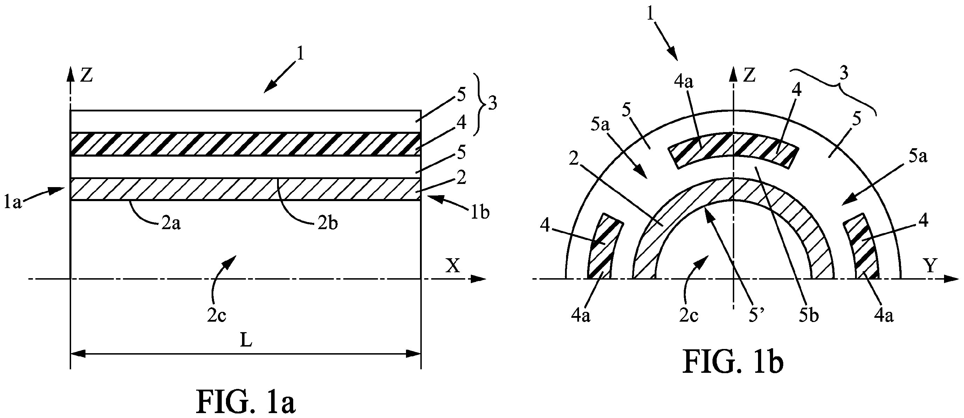

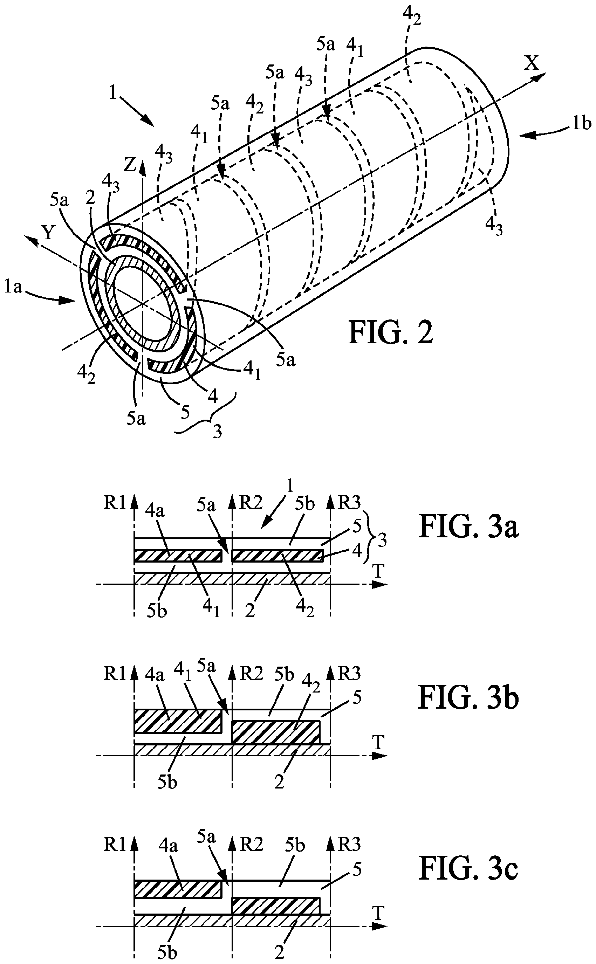

Les **figures 1a, 1b** **et** **2** présentent une conduite 1 selon l'invention en coupe longitudinale selon le plan XZ et en coupe transversale selon le plan YZ. Dans ces figures, seule une moitié supérieure au dessus de l'axe X est présentée, l'autre moitié inférieure étant sensiblement identique par symétrie par rapport à l'axe X. Cependant, on comprendra que tout dispositif avec ou sans symétrie est possible.

La conduite 1 comprend un tube 2 creux, s'étendant dans la direction longitudinale d'axe X entre des première et deuxième extrémités 1a, 1b. Ce tube 2 comprend une surface interne 2a à proximité de l'axe X, et une surface externe 2b plus éloignée de l'axe X. A l'intérieur de la surface interne 2a s'étend une cavité 2c entre une entrée et une sortie de la cavité situées à chacune des extrémités. La cavité 2c est adaptée pour transporter le fluide entre lesdites entrée et sortie.

La conduite 1 a une section de forme sensiblement cylindrique dans le plan YZ, mais d'autres formes pourraient être réalisées.

Le tube 2 peut être réalisé avec un matériau électriquement conducteur, tel que de l'acier, comme cela est représenté sur les figures.

Le tube 2 peut être réalisé avec un matériau électriquement non conducteur (isolant), par exemple un polymère. Ce matériau peut être un polyamide (PA), ou un polyfluorure de vinylidène (PVDF). Ce matériau peut également être un matériau composite comprenant des fibres noyées dans une matrice en polymère. Ces fibres sont par exemple en verre.

La surface externe 2b de ce tube 2 est un support.

Autour de ce support (par exemple sur ce support), il y a au moins une couche de chauffage 3.

La conduite peut comprendre d'autres couches. Par exemple, le tube peut être recouvert d'une couche de protection pour limiter la corrosion dudit tube, généralement en acier. Par exemple, le tube peut être aussi recouvert d'une couche d'adhésion pour faciliter l'adhésion de la couche suivante (couche de chauffage 3) sur ledit tube. Par exemple, la conduite peut aussi comprendre une couche d'isolation thermique, par exemple au dessus de la couche de chauffage 3. Par exemple, la conduite peut aussi comprendre une ou plusieurs couches d'isolation électrique, en dessous ou au dessus de la couche de chauffage 3.

La couche de chauffage 3 est un composite comprenant au moins un premier matériau conducteur d'électricité, composé de premières fibres en carbone noyées dans une première matrice en polymère. Ce polymère est avantageusement une résine époxy, un polyamide (PA), ou un polyfluorure de vinylidène (PVDF).

Les fibres de carbone sont aptes à conduire un courant électrique pour chauffer le tube par effet Joule. La résistivité des fibres de carbone, ayant par exemple pour valeur ρ*_{fibre_carbone}*=1,9.10⁻⁵Ω.*m* à une température de 20°C, ce qui est sensiblement 1100 fois plus résistif que le cuivre à 20°C. C'est pourquoi, lorsque l'on utilise un tel matériau pour réaliser une couche de chauffage, celle-ci recouvre toute la surface du support sur une certaine épaisseur afin d'obtenir la résistivité linéique désirée. Cependant, cette résistivité reste extrêmement faible à comparer d'un matériau isolant tel que le verre. La résistivité du verre a par exemple pour valeur ρ*ᵥₑᵣᵣₑ*=10¹⁷Ω*.m*.

La couche de chauffage 3 selon l'invention est ainsi un composite qui recouvre le tube 2, mais elle est plus complexe que celles de l'art antérieur. Elle comprend deux parties dans son volume :
- une partie de circuit 4, réalisée avec le premier matériau conducteur d'électricité, à savoir des premières fibres en carbone noyées dans une première matrice en polymère, et
- une partie d'isolation 5, réalisée avec un deuxième matériau non conducteur d'électricité, et qui remplit le reste du volume de la couche de chauffage pour isoler électriquement la partie de circuit dans la couche de chauffage.

La partie de circuit 4 s'étend en outre selon au moins une ligne continue entre des extrémités qui sont reliées directement ou indirectement à des moyens d'alimentation électrique qui amène le courant électrique à la couche de chauffage 3 pour chauffer la conduite 1.

La couche de chauffage 3 selon l'invention n'est donc pas une couche continue de matériau conducteur d'électricité recouvrant la surface du support (exemple : tube). La couche de chauffage comprend au moins un circuit conducteur isolé électriquement dans un matériau non conducteur. Il est ainsi possible de concevoir une couche de chauffage 3 avec un circuit adapté pour chauffer des zones prédéterminées. On dépense ainsi moins d'énergie électrique.

Le deuxième matériau est avantageusement composé de deuxièmes fibres noyées dans une deuxième matrice en polymère. Ces deuxièmes fibres sont non conductrices d'électricité (isolantes).

La couche de chauffage 3 est donc un composite comprenant deux types de fibres : des fibres conductrices de carbone et des fibres non conductrices. Grâce à cette structure composite avec des fibres, la couche de chauffage 3 est mécaniquement très résistante.

En variante, les deuxièmes fibres sont en verre ou en aramide (par exemple un para-aramide vendu sous le nom commercial kevlar). La couche de chauffage 3 est ainsi encore plus résistante mécaniquement.

En variante, les première et/ou deuxième fibres sont un mélange de fibres. Par exemple, les premières fibres sont un mélange de fibres en carbone et de fibre en verre, ou un mélange de fibres en carbone et de fibres en aramide. Par exemple, les deuxièmes fibres sont un mélange de fibres en verre et de fibres en aramide. Les conductivités électriques de la partie de circuit 4 et de la partie d'isolation 5 peuvent ainsi être prédéterminées et adaptées chacune à l'application.

En variante, le polymère de la deuxième matrice et le polymère de la première matrice sont identiques. La couche de chauffage 3 forme donc un seul composite avec la même matrice polymère. Cette couche a ainsi une continuité de matériau qui la rend encore plus résistante mécaniquement.

La couche de chauffage 3 de la conduite 1 est par exemple fabriquée par des moyens connus en utilisant des bandes préformées de composite de deux types (composées du premier matériau ou du deuxième matériau), chaque bande préformée s'étendant selon une direction et comprenant des fibres (carbone, verre ou kevlar) noyées dans une matrice de polymère. Les fibres sont éventuellement orientées dans la direction de la bande préformée.

Le volume de la couche de chauffage 3 s'étend par exemple selon une épaisseur constante sur le support, (tube 2), dans une direction perpendiculaire à sa surface. La couche de chauffage 3 de la conduite 1 est une couche cylindrique située sur le tube 2.

La couche de chauffage 3 de la conduite 1 représentée en figure 1b comprend une partie de circuit 4 comprenant quatre lignes disposées à l'intérieur de la couche de chauffage 3, chaque ligne étant recouverte sur tous ses côtés latéraux par la partie d'isolation 5. Notamment, la partie d'isolation 5 comprend des portions de séparation 5a situées entre chaque ligne pour les séparer les unes des autres, et ainsi les isoler électriquement.

Cependant la couche de chauffage 3 de l'invention peut comprendre une seule ligne, deux lignes, ou trois lignes ou plus. Les positions, formes longitudinales ou transversales de ces lignes peuvent également varier.

Grâce, à une unique couche de chauffage 3 qui comprend plusieurs lignes conductrices d'électricité, on évite l'empilement alterné de couches de chauffage et de couches d'isolation de l'art antérieur, dans lequel ces couches recouvrent à chaque fois toute la surface du support. Le dispositif de chauffage selon l'invention a donc une épaisseur plus faible (dimension plus petite dans la deuxième direction R1).

Par exemple, chaque ligne de la partie de circuit 4 peut être une ligne sensiblement rectiligne qui s'étend dans la direction longitudinale X, ou une ligne qui s'étend dans une direction inclinée par rapport à la direction longitudinale X.

Dans la vue en coupe de la figure 1b, dans un plan perpendiculaire à la direction longitudinale X, chaque ligne a une section de ligne 4a ayant une forme prédéterminée, par exemple une forme de rectangle ou une forme de rectangle courbé pour s'adapter à la forme du tube. Cette section de ligne 4a permet de faire passer le courant électrique nécessaire au réchauffement de la conduite 1.

En variante, chaque ligne peut s'étendre selon une courbe quelconque prédéterminée au dessus du support (tube 2).

Chaque ligne forme un fil ou élément conducteur d'un circuit.

Les extrémités des lignes sont aptes à être reliées directement ou indirectement à des moyens d'alimentation électrique pour faire passer du courant.

Le type d'alimentation électrique (courant continu, courant alternatif, courant biphasé ou triphasé) est adapté au nombre de lignes dans la partie de circuit 4 et à leurs caractéristiques (section de ligne 4a, longueur de ligne, résistivité du matériau).

Des extrémités de lignes situées à une seule extrémité de la conduite sont éventuellement interconnectées entre elles pour former un circuit électrique en étoile plus adapté à une alimentation de type multiphasée. La connexion électrique est ainsi simplifiée, et d'un seul côté du dispositif 1.

En variante, les lignes sont indépendantes les unes des autres. Eventuellement, l'alimentation comprend des moyens de commutation pour alimenter une ou plusieurs des lignes disponibles. Le chauffage du dispositif peut être ainsi régulé.

En **figure 2**, la conduite 1 comprend une partie de circuit 4 qui comprend trois lignes de références 4₁, 4₂ et 4₃.

Chaque ligne forme une hélice autour du tube 2 qui s'étend tour après tour autour du tube dans la direction longitudinale X. Les hélices des trois lignes sont imbriquées l'une dans l'autre, de sorte que dans la direction longitudinale X les lignes 4₁, 4₂ et 4₃ sont alternées. Les première et deuxième extrémités 1a, 1b ont ainsi dans leur section transversale des mêmes sections de ligne.

La partie d'isolation 5 de la couche de chauffage 3 de cette conduite chauffante 1 comprend des portions de séparation 5a qui s'étendent entre chaque tour de l'hélice d'une ligne et/ou entre chaque ligne 4₁, 4₂ et 4₃. Les tours de l'hélice d'une ligne sont isolés l'un de l'autre, et les lignes sont isolées les unes des autres.

Cette conduite 1 à trois lignes est avantageusement alimentée avec une alimentation électrique triphasée.

**En** **figures 3a à 3f** sont représentées des variantes de coupes d'un dispositif de chauffage 1, permettant d'illustrer des variantes de positions et formes de sections de lignes 4a dudit dispositif.

Par exemple, les représentations de ces sections correspondent à des sections de conduites cylindriques représentées en développé selon une première direction T rectiligne correspondant à une direction tangentielle à la conduite. Les deuxièmes directions R1, R2, R3 correspondent à des directions radiales de la conduite.

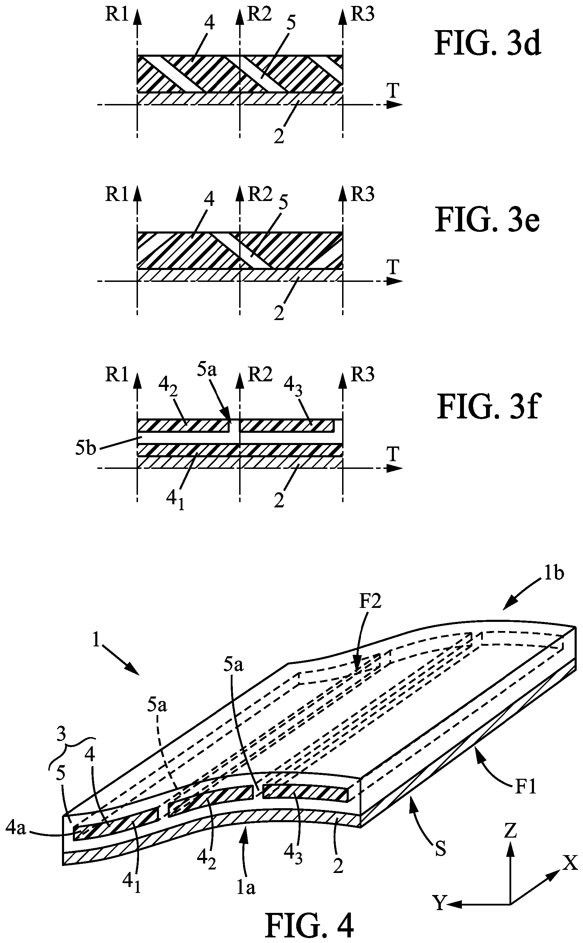

Par exemple, ces représentations peuvent ainsi correspondre aussi à des sections de couverture chauffante sensiblement plane et telle que décrite plus loin, et illustré en figure 4, la première direction correspondant à une direction dans le plan de la couverture (surface S), et la deuxième direction R1 correspondant à une direction perpendiculaire ou normale à cette surface.

Ces figures peuvent représenter ainsi des coupes de conduites ayant deux lignes. Dans ce cas, on considère que la direction R1 correspond à une position angulaire de 0°, que la direction R2 correspond à une position angulaire de 180°, et que la direction R3 correspond à une position angulaire de 360°. Mais, ces figures peuvent représenter des coupes de conduites avec moins de lignes ou plus de lignes, le motif étant répétable ou périodique. Il suffit de définir les valeurs des positions angulaires des directions R1, R2 et R3.

Selon une première variante en figure 3a, les sections de ligne 4a des deux lignes 4₁ et 4₂ sont des tronçons rectangulaires séparés et isolés les uns des autres dans la première direction T par la portion de séparation 5a de la partie d'isolation 5.

Les lignes 4₁ et 4₂ sont également séparées ou isolées dans les deuxièmes directions R1, R2, R3 par des couches d'isolations 5b de la partie d'isolation 5.

Ces séparations ou isolations sont remplies du deuxième matériau non conducteur d'électricité de la partie d'isolation 5. Ainsi, les lignes sont enveloppées dans ce matériau d'isolation électrique.

Selon une deuxième variante en figure 3b, les sections de ligne 4a sont de plus décalées dans la deuxième direction R1 alternativement (une sur deux dans la première direction T). La partie d'isolation 5 a une forme en crochet ou en créneau passant en dessous d'une première ligne puis au dessus d'une deuxième ligne adjacente (alternativement dessus et dessous les lignes).

Selon une troisième variante en figure 3c, les épaisseurs dans la deuxième direction R1 des lignes (partie de circuit 4) et de la partie d'isolation 5 sont identiques. Chaque ligne a ainsi une épaisseur faisant la moitié de l'épaisseur de la couche de chauffage 3.

Selon une quatrième variante en figure 3d, les sections de ligne 4a ne sont plus rectangulaires mais en forme de losange, de sorte qu'elles ont des faces inclinées par rapport à la deuxième direction R1.

Selon une cinquième variante en figure 3e, les sections de ligne 4a ont une forme de trapèze. Les sections de ligne 4a sont alternativement (une sur deux dans la première direction T) inversées. Une deuxième ligne a une forme de trapèze inversée par rapport à celle d'une première ligne. Les trapèzes successifs et adjacents se combinent pour que la portion de séparation 5a qui les sépare a une épaisseur sensiblement constante.

Selon une sixième variante en figure 3f, les sections de ligne 4a ont des surfaces et/ou formes différentes. Par exemple, une première ligne 4₁ proche du support 2 le recouvre entièrement. Ensuite, une couche d'isolation 5b de la partie d'isolation 5 recouvre entièrement cette première ligne. Puis, plusieurs lignes 4₂, 4₃ sont situées sur cette couche d'isolation 5b et sont séparées les unes des autres par des portions de séparation 5a.

Dans cette sixième variante, la première ligne 4₁ au plus proche du support 2 (tube) peut avoir une section différente de (et par exemple plus importante que) chacune des autres lignes 4₂, 4₃. Les surfaces des sections de chaque ligne conductrice peut ainsi être adaptée pour obtenir un équilibrage des courants électriques dans chacune des lignes pour améliorer le chauffage du support tout en réduisant l'encombrement transversal.

Par exemple, en alimentation multiphasée, elle peut être la ligne de retour (ou principale) et conduire un courant égal à la somme des courants des autres lignes. Ainsi, la première ligne 4₁ et la couche de chauffage 3 sont plus efficaces pour réchauffer le support. En outre, l'encombrement transversal (radial) est réduit.

Optionnellement, les autres lignes 4₂, 4₃ sont toutes situées dans une seule couche située au dessus de la couche d'isolation 5b pour optimiser l'efficacité du chauffage et pour réduire l'encombrement transversal (radial).

Optionnellement, dans le cas d'un support de type tube, les autres lignes 4₂, 4₃ sont enroulées en hélice autour du tube de la conduite. La circulation du fluide étant en direction sensiblement longitudinale du tube, le chauffage de la conduite avec des lignes enroulées en hélice autour du tube est encore plus efficace. Cet agencement permet également d'obtenir un chauffage plus uniforme, adapté pour minimiser de multiples points froids dans la conduite. L'enroulement en hélice présente aussi l'avantage de permettre une fabrication plus facile. Un autre avantage est de permettre une intégrité et résistance améliorée des couches, en comparaison à une disposition des lignes additionnelles 4₂ et 4₃ dans la direction parallèle à l'axe longitudinal du tube où le risque de délamination de ces lignes (couches de matériau) est plus élevé.

Optionnellement, l'alimentation électrique est triphasée, et la couche de chauffage comprend une première ligne 4₁ et deux autres lignes.

Un avantage de toutes les configurations de cette sixième variante est de faciliter et d'optimiser la fabrication (production) de différents pipelines chauffants, ce qui permet de diminuer les coûts de production et de stockage. En effet, on peut produire un premier tube avec la seule couche correspondant à la première ligne 4₁ pour la fabrication d'un pipeline disposant d'une unique ligne 4₁ de chauffage. On peut l'utiliser pour fabriquer d'un pipeline adapté à une alimentation triphasée en ajoutant sur ladite couche 4₁ de ce premier tube les couches d'isolant 5b et les autres lignes de chauffage 4₂ et 4₃.

**La** **figure 4** présente un autre type de dispositif de chauffage électrique 1 selon l'invention: une couverture chauffante.

Cette couverture chauffante 1 sensiblement flexible, s'étend selon une surface S approximativement dans un plan XY. Elle comprend une première face F1 (face inférieure) et une deuxième face F2 (face supérieure) dans la direction Z.

Dans cette direction Z, la couverture chauffante 1 est constituée au moins :
- d'un support 2 sensiblement plan, et
- d'une couche de chauffage 3 sur ledit support 2.

La couche de chauffage 3 comprend une partie de circuit 4 et une partie d'isolation 5.

La partie de circuit 4 comprend au moins une ligne continue entre des extrémités reliées directement ou indirectement à l'alimentation électrique.

La partie d'isolation 5 isole électriquement la ligne dans la couche de chauffage 3 au moins dans les directions de la surface S (plan XY de la figure 4), par des portions de séparation 5a.

Grâce à ces dispositions, la couche de chauffage 3 forme un circuit électrique qui peut être prédéterminé pour réchauffer plus certaines zones et pour chauffer moins d'autres zones. Une ligne peut être le retour d'une autre, et les connexions électriques sont simplifiées et/ou réunis d'un seul côté du dispositif. La couverture chauffante comprend moins de couches superposées (couche chauffante / couche d'isolations) et est donc plus flexible.

Les dispositions géométriques de la couche de chauffages 3 dans une coupe transversale (plan XZ) peuvent être similaires à celles décrites en figures 3a-3f.

Les dispositions des matériaux composants la partie de circuit 4 et la partie d'isolation 5 peuvent être identiques aux dispositions décrites pour la conduite chauffante 1 (figures 1-2).

La matrice utilisée pour les divers matériaux composites est avantageusement un polymère de type élastomère. La couverture 1 est ainsi flexible.

Toutes les variantes envisagées pour la conduite 1 et son alimentation sont également possibles pour la présente couverture chauffante.

## Revendications

1. Dispositif de chauffage électrique comprenant :
- un support (2) qui s'étend selon une surface (S),
- une couche de chauffage (3) située sur ledit support, ladite couche de chauffage comprenant un premier matériau conducteur d'électricité, ledit premier matériau comprenant des premières fibres en carbone noyées dans une première matrice en polymère, et ladite couche de chauffage étant destinée à être connectée à une alimentation électrique pour chauffer ledit dispositif,
dans lequel la couche de chauffage (3) a un volume qui comprend :
- une partie de circuit (4) composée du premier matériau conducteur d'électricité et qui s'étend selon au moins une ligne continue entre des extrémités reliées directement ou indirectement à l'alimentation électrique, et
- une partie d'isolation (5) composée d'un deuxième matériau non conducteur d'électricité et qui remplit le reste du volume de la couche de chauffage, ladite partie d'isolation isolant électriquement la partie de circuit dans la couche de chauffage, et la couche de chauffage (3) comprend :
- une première ligne (4₁) de la partie circuit (4) proche du support et qui le recouvre entièrement,
- une couche d'isolation (5b) appartenant à la partie d'isolation (5) et qui recouvre entièrement la première ligne (4₁), et la couche de chauffage (3) est **caractérisée en ce qu'**elle comprend:
- plusieurs lignes (4₂, 4₃) de la partie circuit (4) situées sur ladite couche d'isolation (5b) et séparées les unes des autres par des portions de séparation (5a) de la partie d'isolation (5).

2. Dispositif selon la revendication 1, dans lequel le deuxième matériau comprend des deuxièmes fibres noyées dans une deuxième matrice en polymère, lesdites deuxièmes fibres étant non conductrices d'électricité.

3. Dispositif selon la revendication 2, dans lequel les deuxièmes fibres sont des fibres de verre.

4. Dispositif selon la revendication 2 ou la revendication 3, dans lequel le polymère de la deuxième matrice est identique au polymère de la première matrice.

5. Dispositif selon l'une quelconque des revendications 1 à 4, dans lequel la partie de circuit (4) comprend trois lignes continues et séparées l'une de l'autre par des portions de séparation (5a) de la partie d'isolation (5), chaque ligne étant alimentée par une phase d'une alimentation triphasée.

6. Dispositif la revendication 5, dans lequel chaque ligne (4₁, 4₂) comprend une section de ligne (4a) dans un plan sensiblement perpendiculaire à la surface (S), lesdites sections de ligne étant alternées avec les portions de séparation (5a) de partie d'isolation (5) dans au moins une première direction (T) dudit plan sensiblement parallèle à la surface (S).

7. Dispositif selon la revendication 6, dans lequel les sections de ligne (4a) sont alternativement décalées dans une deuxième direction (R1) sensiblement perpendiculaire à la première direction (T) et dans une direction opposée à ladite deuxième direction.

8. Dispositif selon l'une quelconque des revendications 6 à 7, dans lequel les sections de ligne (4a) ont sensiblement toutes la même surface.

9. Dispositif selon l'une quelconque des revendications 6 à 8, dans lequel les sections de ligne (4a) ont une forme au moins deux fois plus allongée dans la première direction (T) que dans une deuxième direction (R1) sensiblement perpendiculaire à la première direction.

10. Dispositif selon l'une quelconque des revendications 1 à 9, dans lequel la couche de chauffage (3) est réalisée par dépôt sur le support (2) d'une pluralité de premières bandes composites composées du premier matériau et d'une pluralité de deuxièmes bandes composites composées du deuxième matériau, des positions de dépôt desdites premières et deuxièmes bandes composites déterminant la formation de la partie de circuit (4) et de la partie d'isolation (5) de la couche de chauffage (3).

11. Dispositif selon l'une des revendications 1 à 10, dans lequel :
- le support (2) est un tube creux s'étendant dans une direction longitudinale (X) et destiné à transporter un fluide comprenant un hydrocarbure, ledit tube (2) ayant au moins une surface externe (2b) électriquement isolante, et
- la couche de chauffage (3) est sensiblement une couche de forme cylindrique au dessus du tube.

12. Dispositif selon la revendication 11, dans lequel la ligne a une forme en hélice autour dudit tube, et la partie d'isolation (5) a une portion de séparation (5a) qui s'étend entre chaque tour de l'hélice.

13. Dispositif selon l'une des revendications 1 à 10, dans lequel le support (2) est une membrane souple destinée à recouvrir au moins une zone d'un dispositif de transport d'un fluide comprenant un hydrocarbure, et la couche de chauffage (3) est une couche qui recouvre au moins une face de ladite membrane.

## Patentansprüche

1. Elektrische Heizeinrichtung, umfassend:
- einen Träger (2), der sich entlang einer Fläche (S) erstreckt,
- eine Heizschicht (3), die auf dem Träger angeordnet ist, wobei die Heizschicht ein erstes elektrisch leitfähiges Material umfasst, wobei das erste Material erste Kohlenstofffasern umfasst, die in eine erste Polymermatrix eingebettet sind, und wobei die Heizschicht dazu bestimmt ist, an eine Stromversorgung zum Beheizen der Vorrichtung angeschlossen zu werden,
wobei die Heizschicht (3) ein Volumen aufweist, welches umfasst:
- einen Schaltungsabschnitt (4), der aus dem ersten elektrisch leitenden Material besteht und der sich in wenigstens einer durchgehenden Leitung zwischen Enden erstreckt, die direkt oder indirekt mit der Stromversorgung verbunden sind, und
- einen Isolationsabschnitt (5), der aus einem zweiten, elektrisch nicht leitenden Material besteht und den Rest des Volumens der Heizschicht ausfüllt, wobei der Isolationsabschnitt den Schaltungsabschnitt in der Heizschicht elektrisch isoliert,
und wobei die Heizschicht (3) umfasst:
- eine erste Leitung (4₁) des Schaltungsabschnitts, die nahe am Substrat liegt und dieses vollständig bedeckt,
- eine Isolationsschicht (5b), die zu dem Isolationsabschnitt (5) gehört und die erste Leitung (4₁) vollständig bedeckt, und wobei die Heizschicht (3) **dadurch gekennzeichnet ist, dass** sie umfasst:
- mehrere Leitungen (4₂, 4₃) des Schaltungsabschnitts (4), die auf der Isolationsschicht (5b) angeordnet und durch Trennabschnitte (5a) des Isolationsabschnitts (5) voneinander getrennt sind.

2. Vorrichtung nach Anspruch 1, wobei das zweite Material zweite Fasern umfasst, die in eine zweite Polymermatrix eingebettet sind, wobei die zweiten Fasern elektrisch nicht leitend sind.

3. Vorrichtung nach Anspruch 2, wobei die zweiten Fasern Glasfasern sind.

4. Vorrichtung nach Anspruch 2 oder Anspruch 3, wobei das Polymer der zweiten Matrix und das Polymer der ersten Matrix identisch sind.

5. Vorrichtung nach einem der Ansprüche 1 bis 4, wobei der Schaltungsabschnitt (4) drei durchgehende und durch Trennabschnitte (5a) des Isolationsabschnitts (5) voneinander getrennte Leitungen umfasst, wobei jede Leitung von einer Phase einer dreiphasigen Stromversorgung gespeist ist.

6. Vorrichtung nach Anspruch 5, wobei jede Leitung (4₁, 4₂) einen Leitungsabschnitt (4a) in einer Ebene im Wesentlichen senkrecht zur Oberfläche (S) umfasst, wobei die Leitungsabschnitte mit den Trennabschnitten (5a) des Isolationsabschnitts (5) in wenigstens einer ersten Richtung (T) der Ebene im Wesentlichen parallel zur Oberfläche (S) abwechseln.

7. Vorrichtung nach Anspruch 6, wobei die Leitungsabschnitte (4a) abwechselnd in einer Richtung (R1) senkrecht zu der ersten Richtung (T) und in einer Richtung entgegengesetzt zu der zweiten Richtung verschoben sind.

8. Vorrichtung nach einem der Ansprüche 6 bis 7, wobei die Leitungsabschnitte (4a) im Wesentlichen alle die gleiche Fläche haben.

9. Vorrichtung nach einem der Ansprüche 6 bis 8, wobei die Leitungsabschnitte (4a) eine Form aufweisen, die in der ersten Richtung (T) wenigstens doppelt so langgestreckt ist wie in einer zweiten Richtung (R1), die im Wesentlichen senkrecht zur ersten Richtung verläuft.

10. Vorrichtung nach einem der Ansprüche 1 bis 9, wobei die Heizschicht (3) durch Aufbringen einer Vielzahl von ersten Verbundstreifen aus dem ersten Material und einer Vielzahl von zweiten Verbundstreifen aus dem zweiten Material auf dem Träger (2) hergestellt ist, wobei die Positionen der Aufbringung der ersten und zweiten Verbundstreifen die Bildung des Schaltungsabschnitts (4) und des Isolationsabschnitts (5) der Heizschicht (3) bestimmen.

11. Vorrichtung nach einem der Ansprüche 1 bis 10, wobei:
- der Träger (2) ein hohles Rohr ist, welches sich in einer Längsrichtung (X) erstreckt und zum Transport eines Fluids bestimmt ist, das einen Kohlenwasserstoff umfasst, wobei das Rohr (2) wenigstens eine elektrisch isolierende Au-ßenfläche (2b) aufweist, und
- wobei die Heizschicht (3) im Wesentlichen eine zylindrisch geformte Schicht über dem Rohr ist.

12. Vorrichtung nach Anspruch 11, wobei die Leitung eine schraubenförmige Form um das Rohr hat und der Isolationsabschnitt (5) einen Trennabschnitt (5a) aufweist, der sich zwischen jeder Windung der Schraube erstreckt.

13. Vorrichtung nach einem der Ansprüche 1 bis 10, wobei der Träger (2) eine flexible Membran zum Abdecken wenigstens eines Bereichs einer Vorrichtung zum Transportieren eines einen Kohlenwasserstoff umfassenden Fluids ist, wobei die Heizung (3) eine Schicht ist, die wenigstens eine Seite der Membran bedeckt.

## Claims

1. Electrical heating device comprising:
- a support (2) which extends along a surface (S),
- a heating layer (3) situated on the said support, the said heating layer comprising a first electrically conducting material, the said first material comprising first carbon fibres embedded in a first polymer matrix, and the said heating layer being intended to be connected to an electrical power supply to heat the said device,
wherein **that** the heating layer (3) has a volume which comprises:
- a circuit part (4) composed of the first electrically conducting material and which extends along at least one continuous line between ends linked directly or indirectly to the electrical power supply, and
- an insulation part (5) composed of a second electrically non-conducting material and which fills the remainder of the volume of the heating layer, the said insulation part electrically insulating the circuit part in the heating layer, and
the heating layer (3) comprises:
- a first line (4₁) of the circuit part (4) close to the support and which covers it entirely,
- an insulation layer (5b) belonging to the insulation part (5) and which entirely covers the first line (4₁), and the heating layer (3) is **characterized in that** it comprises:
- several lines (4₂, 4₃) of the circuit part (4) situated on the said insulation layer (5b) and separated from one another by separation portions (5a) of the insulation part.

2. Device according to Claim 1, in which the second material comprises second fibres embedded in a second polymer matrix, the said second fibres being electrically non-conducting.

3. Device according to Claim 2, in which the second fibres are glass fibres.

4. Device according to Claim 2 or Claim 3, in which the polymer of the second matrix is identical to the polymer of the first matrix.

5. Device according to any one of Claims 1 to 4, in which the circuit part (4) comprises three continuous lines separated from one another by separation portions (5a) of the insulation part (5), each line being supplied by a phase of a three-phase power supply.

6. Device according to Claim 5, in which each line (4₁, 4₂) comprises a line section (4a) in a plane substantially perpendicular to the surface (S), the said line sections being alternated with the insulation part (5) separation portions (5a) in at least one first direction (T) of the said plane substantially parallel to the surface (S) .

7. Device according to Claim 6, in which the line sections (4a) are alternately offset in a second direction (R1) substantially perpendicular to the first direction (T) and in a direction opposite to the said second direction.

8. Device according to any one of Claims 6 to 7, in which the line sections (4a) all have substantially the same surface.

9. Device according to any one of Claims 6 to 8, in which the line sections (4a) have a shape at least twice as elongated in the first direction (T) as in a second direction (R1) substantially perpendicular to the first direction.

10. Device according to any one of Claims 1 to 9, in which the heating layer (3) is produced by deposition on the support (2) of a plurality of first composite bands composed of the first material and of a plurality of second composite bands composed of the second material, positions of deposition of the said first and second composite bands determining the formation of the circuit part (4) and of the insulation part (5) of the heating layer (3).

11. Device according to one of Claims 1 to 10, in which:
- the support (2) is a hollow tube extending in a longitudinal direction (X) and intended to transport a fluid comprising a hydrocarbon, the said tube (2) having at least one electrically insulating external surface (2b), and
- the heating layer (3) is substantially a layer of cylindrical shape above the tube.

12. Device according to Claim 11, in which the line has a helix shape around the said tube, and the insulation part (5) has a separation portion (5a) which extends between each turn of the helix.

13. Device according to one of Claims 1 to 10, in which the support (2) is a flexible membrane intended to cover at least one zone of a device for transporting a fluid comprising a hydrocarbon, and the heating layer (3) is a layer which covers at least one face of the said membrane.
